# EUROPÄISCHE PATENTSCHRIFT

(11) **EP 0 365 698 B1**
(45) Veröffentlichungstag und Bekanntmachung des Hinweises auf die Patenterteilung: **11.08.1993**
(21) Anmeldenummer: 88117790.1
(22) Anmeldetag: 26.10.1988
(51) Int. Cl.: H01R 13/717, G02B 6/42

(54) **Statusanzeigeeinrichtung**
Status display device
Dispositif pour indication d'état

(43) Veröffentlichungstag der Anmeldung: 02.05.1990
(73) Patentinhaber: Weidmüller Interface GmbH & Co., D-32760 Detmold (DE)
(72) Erfinder: Dürkop, Willi, D-6107 Reinheim (DE); Heidotting, Werner, D-6115 Münster 2 (DE); Spanke, Reinhold, D-6074 Rödermark (DE)
(74) Vertreter: Stracke, Alexander, Dipl.-Ing.

(56) Entgegenhaltungen:
- DE-A- 2 939 231
- DE-A- 3 703 423
- US-A- 3 699 651

## Beschreibung

Die Erfindung betrifft eine Statusanzeigeeinrichtung für Leiterplattenanschlußelemente in Verbindung mit Leuchtdioden. Es ist aus DE-A-32 33 153 bekannt, Spezialleuchtdioden mit sehr langen Anschlußbeinen oder langen Spezialgehäusen in räumlicher Nähe zu den Anschlußelementen auf der Leiterplatte festzusetzen, oder sie auch schon im Inneren der Anschlußelemente zu integrieren. Die Leuchtdiode muß dann in die Nähe einer sichtbaren Oberfläche der Anschlußelemente geführt und gegebenenfalls dort festgelegt werden. Es ergibt sich ein hoher Montageaufwand.

Es ist ferner in EP-A-0 315 705 bereits vorgeschlagen worden, eine Vereinfachung von Montage und konstruktiver Ausgestaltung dadurch herbeizuführen, daß die Leuchtdiode in einfacher Weise direkt auf der Leiterplatte befestigt wird und ein sich zwischen der Leuchtdiode und einer sichtbaren Oberfläche des Leiterplattenanschlußelementes erstreckendes Adapterteil aus lichtleitendem Material vorgesehen wird, das mit dem Anschlußelement verbindbar ist. Auf diese Weise können handelsübliche Leuchtdioden vorzugsweise vollautomatisch auf der Leiterplatte angebracht werden. Es können dann die Anschlußelemente an der Leiterplatte mit ebenfalls den üblichen Anschlußtechniken befestigt werden und es wird dann jeweils Adapterteil für den Lichttransport angebracht. Es ist in diesem Zusammenhang auch schon vorgeschlagen worden, die Adapterteile quasi in einer Huckepackanordnung an den Leiterplattenanschlußelementen anzubringen.

Eine dem Oberbegriff des Anspruchs 1 entsprechende Statusanzeigeeinrichtung ist auch aus dem Dokument DE-A-37 03 423 bekannt.

Der vorliegenden Erfindung liegt die Aufgabe zugrunde, eine derartige Statusanzeigeeinrichtung insbesondere bezüglich der Montage noch weiter zu vereinfachen.

DIe erfindungsgemäße Lösung besteht darin, daß die Adapterteile im Bereich der Lichtaustrittszone ein Formschlußelement aufweisen und Aufsatzstücke aus lichtleitendem Material vorgesehen sind, die eine entsprechende Formschlußaufnahme zur Verbindung mit den Adapterteilen sowie ein eigenes Formschlußelement zur Verbindung benachbarter Aufsatzstücke miteinander aufweisen. Dank dieser Ausgestaltung ist es möglich, die lichtleitenden Adapterteile mit Hilfe der Aufsatzstücke aus lichtleitendem Material vor der endgültigen Montage an den Leiterplattenanschlußelementen unabhängig von letzteren im Sinne einer Vormontage zu Gruppen zusammenzufassen. Diese vormontierten Gruppen mit Adapterteilen in der gewünschten und vorgegebenen Anzahl können dann nachträglich, z.B. nach der Verbindung der Leuchtdioden und der Leiterplattenanschlußelemente mit der Leiterplatte mittels Tauchlöten, in einem einzigen sehr einfachen Arbeitsgang als vormontierte Gruppe an den fertigmontierten Leiterplattenanschlußelementen festgelegt werden. Eine derartige Vormontage zu Adapterteilengruppen außerhalb der räumlichen Enge der mit der Leiterplatte verbundenen Leiterplattenanschlußelemente ist besonders einfach, bequem und schnell durchzuführen.

Hervorzuheben ist auch, daß durch die Gestaltung der Aufsatzstücke aus lichtleitendem Material im übrigen problemlos auch besondere Lichtanzeigeeffekte einschließlich der Möglichkeit der Lichtweiterleitung von dort verwirklicht werden können.

Gemäß einer besonders zweckmäßigen weiteren Ausgestaltung weisen die Adapterteile beidseitig Abstandsstücke für ihre Anreihung in einem Rastabstand auf und die Aufsatzstücke sind seitlich entsprechend weit über die Adapterteile vorstehend dimensioniert. Dies erleichtert einerseits die Vormontage und hat darüber hinaus den Vorteil, daß sich die Verbindungsstellen der Anzeigeelemente, d. h. die Berührungsstellen bei der Gruppenbildung, außerhalb des eigentlichen Lichtleitungsweges befinden und von daher mögliche Reflektionsverluste weitgehend vermieden sind.

Weitere bevorzugte Ausgestaltungen sind in den übrigen Unteransprüchen gekennzeichnet.

Ausführungsbeispiele einer erfindungsgemäßen Statusanzeigeeinrichtung werden nachstehend unter Bezugnahme auf die beigefügte Zeichnung näher beschrieben.

Es zeigen
- Figur 1: eine Statusanzeigeeinrichtung gemäß der Erfindung in perspektivischer Darstellung,
- Figur 2: eine Statusanzeigeeinrichtung in Seitenansicht, montiert an einem Leiterplattenanschlußelement,
- Figur 3: eine Statusanzeigeeinrichtung aus aneinandergereihten Adapterteilen in Frontansicht.

Die Statusanzeigeeinrichtung beinhaltet eine Mehrzahl von Adapterteilen 1 aus lichtleitendem Material. Sie sind zur Festsetzung an Leiterplattenanschlußelementen bestimmt, wobei direkt auf der Leiterplatte 3 nicht nur die Leiterplattenanschlußelemente 2 sondern auch, in räumlicher Nähe, zu diesen, die Leuchtdioden 4 befestigt sind. Die Adapterteile 1 dienen dazu, zwecks Statusanzeige das Licht der Leuchtdioden 4 in einen Sichtbereich der entsprechenden Leiterplattenanschlußelemente 2 zu leiten.

Zur Festlegung an den Leiterplattenanschlußelememten 2 haben im dargestellten Ausführungsbeispiel die Adapterteile 1 eine Rastfeder 5 sowie diverse Anlageflächen 6, wobei diese Befestigungselemente dazu dienen, die Adapterteile 1 rückwärtig, sozusagen huckepack, an den Leiterplattenanschlußelementen 2 festzulegen, die dann entsprechende Anlageflächen sowie ein Widerlager für die Rastfeder 5 haben. Die Ausgestaltung der Rastfedern und Anlageflächen sowie deren Dimensionierung variieren mit den verschiedenen Arten von Leiterplattenanschlußelementen. Die Verbindungselemente können insgesamt auch durch andere ersetzt sein.

Die Adapterteile 1 haben ferner ein rückwärtiges Lichtwegstück 7, an das sich oberseitig über eine insoweit reflektierend wirkende Schräge 8 ein weiteres Lichtwegstück 9 bis nach vorne oben, bezogen auf das entsprechende Leiterplattenelement 2, anschließt. Im Bereich der hier liegenden Lichtaustrittszone haben nun die Adapterteile 1, vorzugsweise am vorderen Ende des Lichtwegstückes 9, ein Formschlußelement, im dargestellten Ausführungsbeispiel einen Schwalbenschwanz 10. Es sind nun ferner für die einzelnen Adapterteile 1 Aufsatzstücke 11 ebenfalls auch lichtleitendem Material vorgesehen, die rückwärtig eine entsprechende Formschlußaufnahme, im Ausführungsbeispiel also eine schwalbenschwanzförmige Nut 12, zur Verbindung mit den Adapterteilen 1 mittels des Schwalbenschwanzes 10 haben. Die Aufsatzstücke 11 haben ferner ein eigenes Formschlußelement 13, im dargestellten Ausführungsbeispiel wiederum einen Schwalbenschwanz, zur Verbindung benachbarter Aufsatzstücke 11 miteinander.
In zweckmäßiger Ausgestaltung sind die eigenen Formschlußelemente bzw. Schwalbenschwänze 13 der Aufsatzstücke 11 passend zu den formschlußaufnahmen, im Ausführungsbeispiel also den schwalbenschwanzförmigen Nuten 12, ausgebildet. Dabei sitzen gemäß einer bevorzugten Ausführungsform die Schwalbenschwänze 13 jeweils an einer Seite der Aufsatzstücke 11 und können bei Aneinanderreihung damit in die schwalbenschwanzförmige Nut 12 des benachbarten Aufsatzstückes 11 eingesteckt werden, dies dann auch noch unter Verriegelung des nach dem Aufsetzen auf sein Adapterteil darin schon befindlichen Schwalbenschwanzes 10.

Dank der geschilderten Ausgestaltung ist es möglich, außerhalb der Leiterplatte 3 und damit außerhalb der dort gegebenen räumlichen Enge im Bereich der Leiterplattenanschlußelemente 2 und der Leuchtdioden 4 die benötigte Anzahl von Adapterteilen 1 in Anreihung gruppenmäßig vorzumontieren, wobei der Zusammenhalt der Gruppe über die Aufsatzstücke 11 und die entsprechenden geschilderten Formschlußverbindungen geschieht.

In weiterer zweckmäßiger Ausgestaltung haben die Adapterteile 1 beidseitig vorstehende Abstandsstücke 14. Die Aufsatzstücke 1 sind entsprechend mit seitlichem Vorsprung über die Adapterteile 1 dimensioniert, so daß die Anreihung in der vormontierten Gruppe einem Rastermaß entsprechend erfolgt, das sich nach der Dimensionierung eben der Abstandsstücke 14 und der Aufsatzstücke 11 bestimmt. Damit liegen die Berührungsstellen benachbarter Adapterteile 1 und benachbarter Aufsatzstücke 11 innerhalb der vormontierten Gruppe außerhalb des eigentlichen Lichtleitungsweges, so daß Reflektionsverluste weitestgehend ausgeschaltet sind.

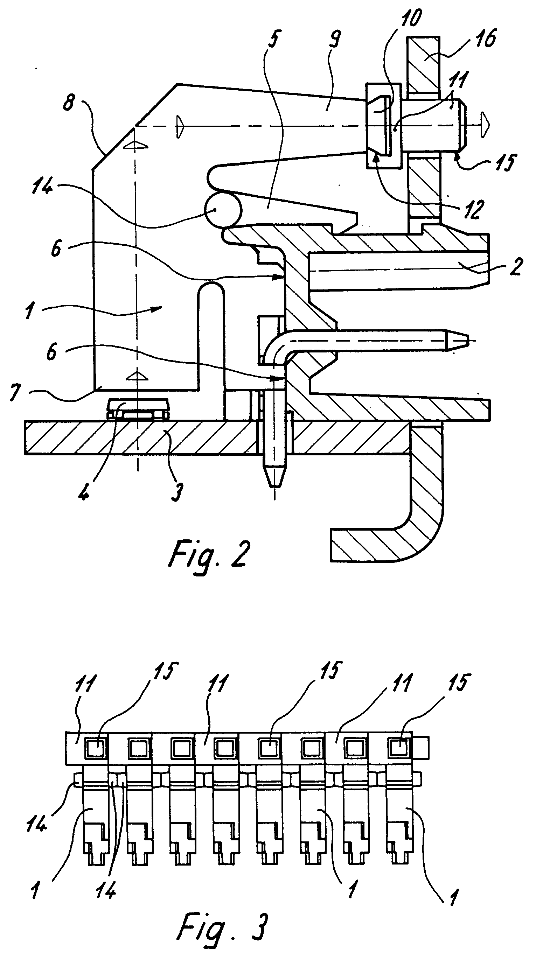

Die Anreihung in einer vormontierten Gruppe ist insbesondere in Figur 3 illustriert. Die vormontierte Gruppe kann in einem einzigen Arbeitsgang geschlossen auf der entsprechenden Anreihung von Leiterplattenanschlußelementen 2, die dann bereits auf der Leiterplatte 3 montiert sind, verrastet werden.

Die lichtabgebenden Köpfe bei derartigen Statusanzeigeeinrichtungen unterliegen dem Erfordernis unterschiedlicher Formengestaltungen. Sie müssen der jeweils gewünschten Anzeigeform angepaßt werden. Variationen bestehen in der Formgebung, der Farbgebung, verschiedenen Oberflächengestaltungen von glatt über prismatisch bis mattscheibenähnlich, der zusätzlichen Aufnahme geprägter Symbole, der Anschlußmöglichkeit von dort weiterführender Lichtleitungskabel. Es besteht ferner häufig das Erfordernis, diesen Kopfbereich durch einen Ausschnitt eines Gehäuses hindurchzuführen. Dies würde dann die Formgebung des Kopfbereiches bestimmen. Es ist hervorzuheben, daß bei der erfindungsgemäßen Ausgestaltung die Anpassungsmöglichkeit und Variabilität sehr begünstigt sind, da sie sich insoweit dann ausschließlich auf die Gestaltung des Kopfes 15 der Aufsatzstücke 11 beziehen, während die Adapterteile 1 als solche für eine bestimmte Leiterplattenanschlußelementenart und für eine bestimmte Leuchtdiodenart immer gleich bleiben können.

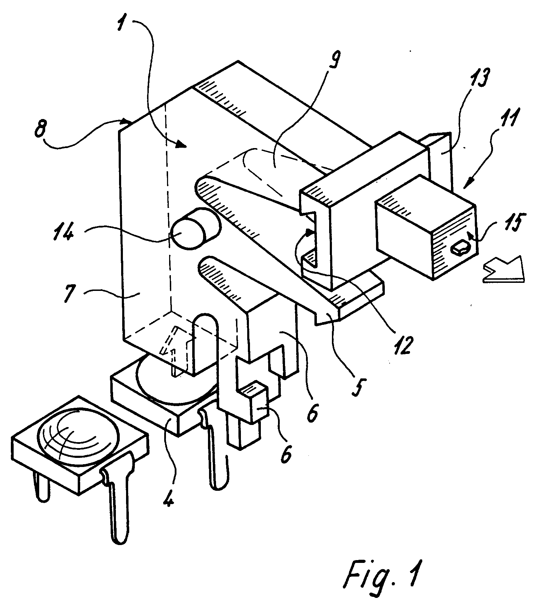

In Figur 1 ist beispielsweise ein Kopf 15 dargestellt, der im wesentlichen rechteckig ausgestaltet ist und eine prismatische Abstrahlfläche hat. In Figur 2 kann es sich um ein zylindrisches Kopfstück 15 handeln, dessen Abstrahlfläche glatt sein könnte. In Figur 2 ist auch illustriert, wie der Kopf 15 durch einen Ausschnitt eines Gehäuses 16 geführt ist.

Die Anschauung der Figur 2 zeigt in diesem Zusammenhang, daß die gewählte Formgebung des Aufsatzstückes, bestehend aus einem Grundkörper mit den Formschlußverbindungselementen und dem davon vorstehenden Kopf 15, die Einfügung von Staubschutzdichtungen zwischen Gehäusewand und Lichtleitelement sehr begünstigt.

## Patentansprüche

1. Statusanzeigeeinrichtung für Leiterplattenanschlußelemente (2) und direkt auf einer Leiterplatte (3) angeordnete Leuchtdioden (4), mit sich zwischen den Leuchtdioden (4) und einer sichtbaren Oberfläche der Leiterplattenanschlußelemente (2) erstreckenden, an den Leiterplattenanschlußelementen (2) festsetzbaren Adapterteilen (1) aus lichtleitendem Material,
**dadurch gekennzeichnet**, daß
die Adapterteile (1) im Bereich der Lichtaustrittszone ein Formschlußelement (10) aufweisen und Aufsatzstücke (11) aus lichtleitendem Material vorgesehen sind, die eine entsprechende Formschlußaufnahme (12) zur Verbindung mit den Adapterteilen (1) sowie ein eigenes Formschlußelement (13) zur Verbindung benachbarter Aufsatzstücke (11) miteinander aufweisen.

2. Statusanzeigeeinrichtung nach Anspruch 1, dadurch gekennzeichnet, daß die eigenen Formschlußelemente (13) der Aufsatzstücke (11) zu deren Formschlußaufnahmen (12) für die Verbindung mit den Adapterteilen (1) passend ausgebildet sind.

3. Statusanzeigeeinrichtung nach Anspruch 1 oder 2, dadurch gekennzeichnet, daß die Adapterteile (1) seitliche Abstandsstücke (14) für die Anreihung in einem Rasterabstand aufweisen und die Aufsatzstücke (11) seitlich entsprechend weit über die Adapterteile (1) vorstehend dimensioniert sind.

4. Statusanzeigeeinrichtung nach Anspruch 1 oder 2, dadurch gekennzeichnet, daß die Adapterteile (1) an ihrem Lichtaustrittsende einen Schwalbenschwanz (10) aufweisen und die Aufsatzstücke (11) eine entsprechende schwalbenschwanzförmige Nut (12), sowie jeweils ein seitlich vorstehendes, zu der Nut (12) passendes Schwalbenschwanzstück (13) haben.

5. Statusanzeigeeinrichtung nach einem oder mehreren der vorhergehenden Ansprüche, dadurch gekennzeichnet, daß die Aufsatzstücke (11) einen die Formschlußverbindungselemente (12, 13) aufweisenden Grundkörper sowie einen davon vorspringenden, lichtabgebenden Kopf (15) aufweisen.

6. Statusanzeigeeinrichtung nach Anspruch 5, dadurch gekennzeichnet, daß die Köpfe (15) der Aufsatzstücke (11) den jeweiligen Anzeigeerfordernissen und etwaigen Ausschnitten in zu durchtretenden Gehäusen (selbst) entsprechend ausgebildet und dimensioniert sind.

7. Statusanzeigeeinrichtung nach einem oder mehreren der vorhergehenden Ansprüche, dadurch gekennzeichnet, daß die Adapterteile (1) eine Rastfeder (5) sowie Anlageflächen (6) zur Verbindung mit den Leiterplattenanschlußelementen (2) haben.

## Claims

1. A status display device for printed circuit board connection elements (2) and light emitting diodes (4) arranged directly on a printed circuit board (3), comprising adaptor portions (1) of light-conducting material, which extend between the light emitting diodes (4) and a visible surface of the printed circuit board connection elements (2) and which can be fixed to the printed circuit board connection elements (2), characterised in that the adaptor portions (1) have a shape-locking connection element (10) in the region of the light exit zone and there are provided attachment portions (11) of light-conducting material, which have a corresponding shape-locking receiving means (12) for connection to the adaptor portions (1) and a particular shape-locking connection element (13) for the connection of adjacent attachment portions (11) to each other.

2. A status display device according to claim 1 characterised in that the particular shape-locking connection elements (13) of the attachment portions (11) are designed to match their shape-locking receiving means (12) for connection to the adaptor portions (1).

3. A status display device according to claim 1 or claim 2 characterised in that the adaptor portions (1) have lateral spacer portions (14) for arrangement in a row at pattern spacings and the attachment portions (11) are dimensioned to project laterally to a suitable extent beyond the adaptor portions (1).

4. A status display device according to claim 1 or claim 2 characterised in that the adaptor portions (1) have a dovetail configuration (10) at their light exit end and the attachment portions (11) have a corresponding dovetail-shaped groove (12) and a respective laterally projecting dovetail portion (13) which matches the groove (12).

5. A status display device according to one or more of the preceding claims characterised in that the attachment portions (11) have a main body having the shape-locking connecting elements (12, 13), and a light-output head (15) which projects from the main body.

6. A status display device according to claim 5 characterised in that the heads (15) of the attachment portions (11) are of a configuration and dimensions which correspond to the respective display requirements and any openings in housings (themselves) through which they are to pass.

7. A status display device according to one or more of the preceding claims characterised in that the adaptor portions (1) have a latching spring (5) and contact surfaces (6) for connection to the printed circuit board connection elements (2).

## Revendications

1. Dispositif indicateur d'état, pour éléments de raccordement de plaquette de circuits imprimés (2) et photo-diodes (4) disposées directement sur une plaquette de circuits imprimés (3), avec des parties adaptatrices (1) en matériau conducteur de la lumière, s'étendant entre les photo-diodes (4) et une surface visible des éléments de raccordement de plaquette de circuits imprimés (2) et susceptibles d'être fixées sur ceux-ci, caractérisé en ce que les parties adaptatrices (1), présentent, dans la région de la zone de sortie de lumière, un élément à ajustement de forme (10) et des pièces de garniture (11) en matériau conducteur de la lumière sont prévus, présentant un logement à ajustement de forme (12) correspondant, en vue d'assurer la liaison avec les parties adaptatrices (1) ainsi qu'un élément à ajustement de forme (13) propre destiné à relier ensemble des pièces de garniture (11) voisines.

2. Dispositif indicateur d'état selon la revendication 1, caractérisé en ce que les éléments à ajustement de forme (13) propres des pièces de garniture (11) sont réalisés pour s'ajuster par rapport à leurs logements à ajustement de forme (12), pour assurer la liaison avec les pièces adaptatrices (1).

3. Dispositif indicateur d'état selon la revendication 1 ou 2, caractérisé en ce que les pièces adaptatrices (1) présentent des pièces d'espacement latérales (14) pour assurer l'alignement, suivant un espacement d'encliquetage, et les pièces de garniture (11) sont dimensionnées latéralement en faisant saillie de manière correspondante loin au dessus des pièces adaptatrices (1).

4. Dispositif indicateur d'état selon la revendication 1 ou 2, caractérisé en ce que les pièces adaptatrices (1) présentent à leur extrémité de sortie de lumière une queue d'aronde (10) et les pièces de garniture (11) présentent une rainure (12) en queue d'aronde correspondante, et ont également chaque fois un morceau en queue d'aronde faisant saillie latéralement et venant s'ajuster dans la rainure (12).

5. Dispositif indicateur d'état selon un ou plusieurs des revendications précédentes, caractérisé en ce que les pièces de garniture (11) présentent un corps de base qui présente les éléments de liaison à ajustement de forme (12, 13), ainsi qu'une tête photoémettrice (15) en faisant saillie.

6. Dispositif indicateur d'état selon la revendication 5 , caractérisé en ce que les têtes (15) des pièces de garniture (11) sont réalisées et dimensionnées de manière correspondant aux éventuelles échancrures ménagées dans des boîtiers (mêmes) à traverser.

7. Dispositif indicateur d'état selon une ou plusieurs des revendications précédentes, caractérisé en ce que les pièces adaptatrices (1) présentent un ressort d'encliquetage (5), ainsi que des surfaces d'appui (6) en vue d'assurer la liaison aux éléments de raccordement de plaquette de circuits imprimés (2).
